# EUROPEAN PATENT APPLICATION

(11) **EP 4 768 278 A1**
(43) Date of publication of application: **01.07.2026**
(21) Application number: 25212275.9
(22) Date of filing: 30.10.2025
(51) Int. Cl.: B60C 11/01, B60C 13/00, B60C 11/13

(54) **PNEUMATIC TIRE**

(30) Priority: 26.12.2024 JP 2024231310
(71) Applicant: SUMITOMO RUBBER INDUSTRIES, LTD., Kobe-shi, Hyogo 651-0072 (JP)
(72) Inventor: MORISHITA, Takeshi, Hyogo, 651-0072 (JP)
(74) Representative: Forresters IP LLP

(57) **Abstract**

A pneumatic tire 1 includes, on a first side portion 3A, first side blocks 11 arranged on a first tire circumferential line Y1 and second side blocks 12 arranged on a second tire circumferential line Y2. The first side blocks 11 and the second side blocks 12 are spaced apart in a tire circumferential direction, but overlap in tire radial and circumferential directions. An overlapping length Ha in the tire radial direction by which the first side block 11 and the second side block 12 overlap is 30% to 60% of a maximum length H2 in the tire radial direction of the second side block 12. An overlapping length La in the tire circumferential direction by which the first side block 11 and the second side block 12 overlap is 5% or more of a maximum length L2 in the tire circumferential direction of the second side block 12.

## Description

### BACKGROUND OF THE INVENTION

### Field of the Invention

The present invention relates to a pneumatic tire.

### Background Art

Japanese Patent No. 6786927 discloses a pneumatic tire that includes a pair of sidewall portions extending from both end portions of a tread portion toward an inner side in the tire radial direction. At least one of the pair of sidewall portions is provided with a plurality of side protectors that protrude outward in the tire axial direction, and recessed portions that are recessed between the side protectors adjacent to each other in the tire circumferential direction.

In general, the side protectors are provided to improve side cut resistance and mud performance. Therefore, in recent years, a tire tends to be large-sized and densified.
However, in such a tire, local concentration of weight and stiffness occurs in the side portion, resulting in deterioration of uniformity.

The present invention has been made in view of the above circumstances, and a main object of the present invention is to provide a pneumatic tire capable of improving uniformity while maintaining cut resistance of a side portion.

### SUMMARY OF THE INVENTION

The present invention is directed to a pneumatic tire including: a tread portion; and a first side portion connected to a tread end of the tread portion, wherein in the first side portion, a plurality of side blocks protruding outward in a tire axial direction from a side reference surface are arranged in a tire circumferential direction, the plurality of side blocks include a plurality of first side blocks arranged on a first tire circumferential line, and a plurality of second side blocks arranged on a second tire circumferential line located inward of the first tire circumferential line in a tire radial direction, the first side blocks and the second side blocks are spaced apart from each other in the tire circumferential direction, one of the first side blocks and one of the second side blocks, which are adjacent to each other in the tire circumferential direction, overlap in the tire radial direction and the tire circumferential direction, an overlapping length in the tire radial direction by which the first side block and the second side block adjacent to each other overlap is 30% to 60% of a maximum length in the tire radial direction of the second side block, and an overlapping length in the tire circumferential direction by which the first side block and the second side block adjacent to each other overlap is 5% or more of a maximum length in the tire circumferential direction of the second side block.

As a result of adopting the above-described configuration, the pneumatic tire of the present invention can improve uniformity while maintaining the cut resistance of the side portion.

### BRIEF DESCRIPTION OF THE DRAWINGS

FIG. 1 is a tire meridional cross-sectional view of the right half of a pneumatic tire according to an embodiment of the present invention;
FIG. 2 is a perspective cross-sectional view of the tire in FIG. 1;
FIG. 3 is a side view of the tire in FIG. 1;
FIG. 4 is an enlarged view of FIG. 3;
FIG. 5 is an enlarged view of the tire in FIG. 1;
FIG. 6 is an enlarged view of FIG. 3;
FIG. 7 is an enlarged view of FIG. 3; and
FIG. 8 is a perspective cross-sectional view showing first side blocks of Example 7.

### DETAILED DESCRIPTION

Hereinafter, an embodiment of the present invention will be described with reference to the accompanying drawings. The drawings contain exaggerated expressions and expressions that differ from the dimensional ratio of the actual structure in order to help the understanding of the present invention. In addition, when there are a plurality of embodiments, the same or common elements are denoted by the same reference characters throughout the description, and the redundant description thereof is omitted.

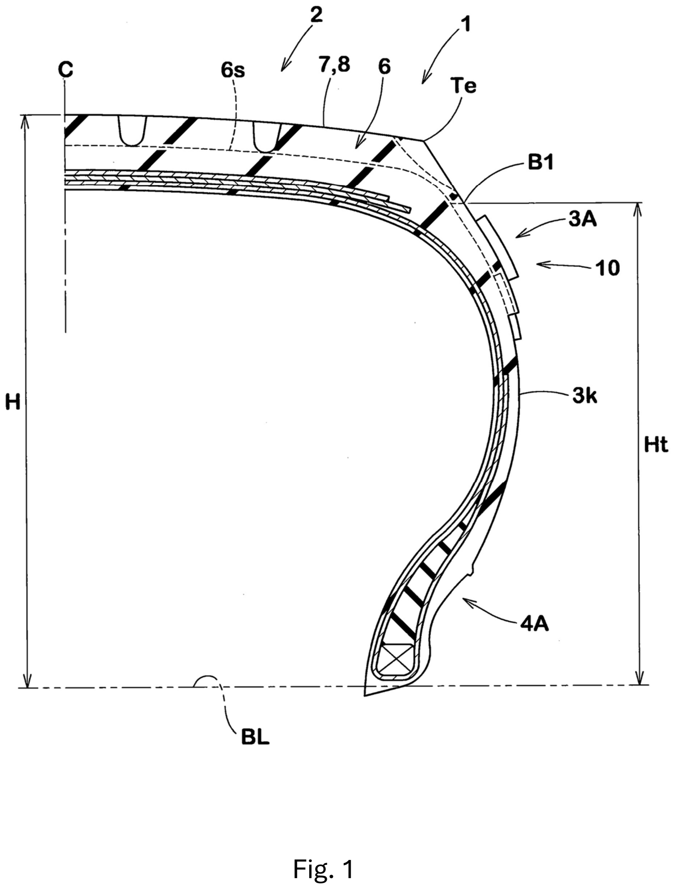

FIG. 1 is a tire meridional cross-sectional view of the right half of a pneumatic tire (hereinafter, sometimes referred to as "tire") 1 showing an embodiment of the present invention. FIG. 1 shows a tire for a passenger car (particularly, a large-sized SUV) as a preferable mode. However, the present invention may be applied to a tire for a small-sized truck, or a tire for a truck or a bus. FIG. 1 shows the tire 1 in a standardized state.

The "standardized state" refers to a state in which a tire is fitted on a standardized rim (not shown) and adjusted to a standardized internal pressure and no load is applied to the tire, in the case of a pneumatic tire for which various standards are defined. In the case of a tire for which various standards are not defined, the standardized state refers to a standard use state, corresponding to the purpose of use of the tire, where the tire is not mounted on a vehicle and no load is applied to the tire. In the present description, unless otherwise specified, dimensions and the like of components of the tire are values measured in the standardized state. Dimensions of components (e.g., internal members of the tire) which cannot be measured in the standardized state are values measured in a state where the tire is approximated to the standardized state as much as possible.

The "standardized rim" is a rim that is defined, in a standard system including a standard on which the tire is based, by the standard for each tire, and is, for example, the "standard rim" in the JATMA standard, the "Design Rim" in the TRA standard, or the "Measuring Rim" in the ETRTO standard.

The "standardized internal pressure" is an air pressure that is defined, in a standard system including a standard on which the tire is based, by the standard for each tire, and is the "maximum air pressure" in the JATMA standard, the maximum value indicated in the table "TIRE LOAD LIMITS AT VARIOUS COLD INFLATION PRESSURES" in the TRA standard, or the "INFLATION PRESSURE" in the ETRTO standard.

The tire 1 includes a tread portion 2, and a first side portion 3A connected to a tread end Te of the tread portion 2. In addition, the tire 1 includes a first bead portion 4A connected to the inner side in the tire radial direction of the first side portion 3A, a second side portion (not shown) on the opposite side of the first side portion 3A with a tire equator C therebetween, and a second bead portion (not shown) connected to the second side portion. In the present embodiment, the second side portion has the same configuration as the first side portion 3A. However, the second side portion may have a different configuration from the first side portion 3A.

In the case of a pneumatic tire, the tread end Te is at a position on the outermost side in the tire axial direction of the tire, when the tire is brought into contact with a flat surface in a standardized load-applied state. The standardized load-applied state is a state where a standardized load is applied to the tire in the standardized state and the tire is brought into contact with the flat surface at a camber angle of 0°. The "standardized load" is a load that is defined, in a standard system including a standard on which the tire is based, by the standard for each tire, and is the "maximum load capacity" in the JATMA standard, the maximum value indicated in the table "TIRE LOAD LIMITS AT VARIOUS COLD INFLATION PRESSURES" in the TRA standard, or the "LOAD CAPACITY" in the ETRTO standard.

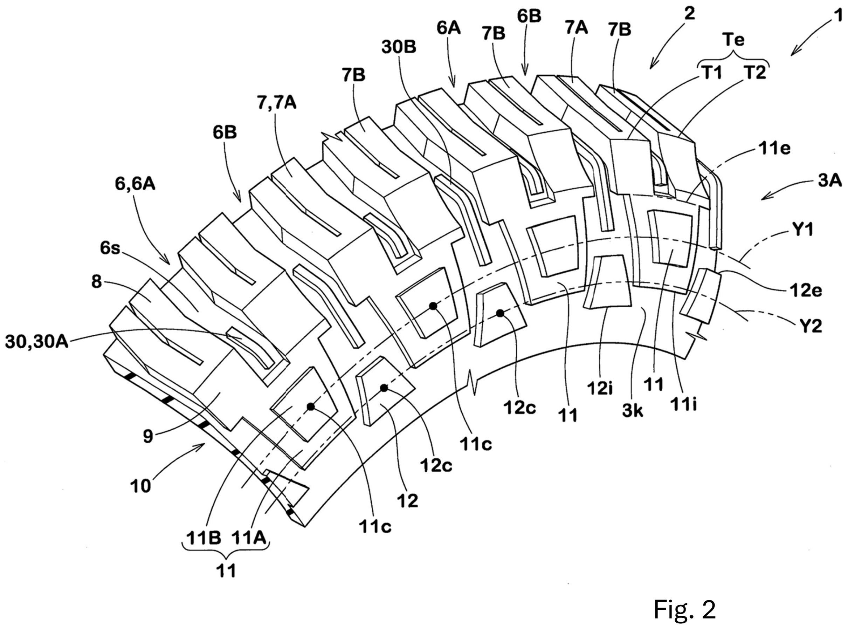

FIG. 2 is a perspective cross-sectional view of the tire 1 in FIG. 1. FIG. 2 shows a portion around the first side portion 3A. As shown in FIG. 1 and FIG. 2, in the first side portion 3A, a plurality of side blocks 10 protruding outward in the tire axial direction from a side reference surface 3k are arranged in the tire circumferential direction. The side blocks 10 exhibit basic cut resistance.

The plurality of side blocks 10 include a plurality of first side blocks 11 arranged on a first tire circumferential line Y1, and a plurality of second side blocks 12 arranged on a second tire circumferential line Y2 which is located inward of the first tire circumferential line Y1 in the tire radial direction. The first side block 11 and the second side block 12 are spaced apart from each other in the tire circumferential direction.

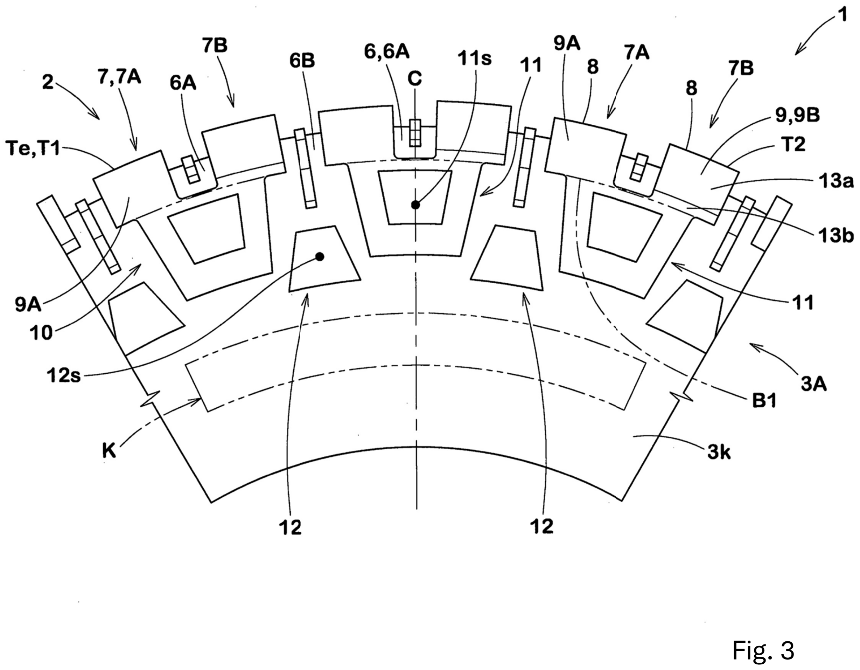

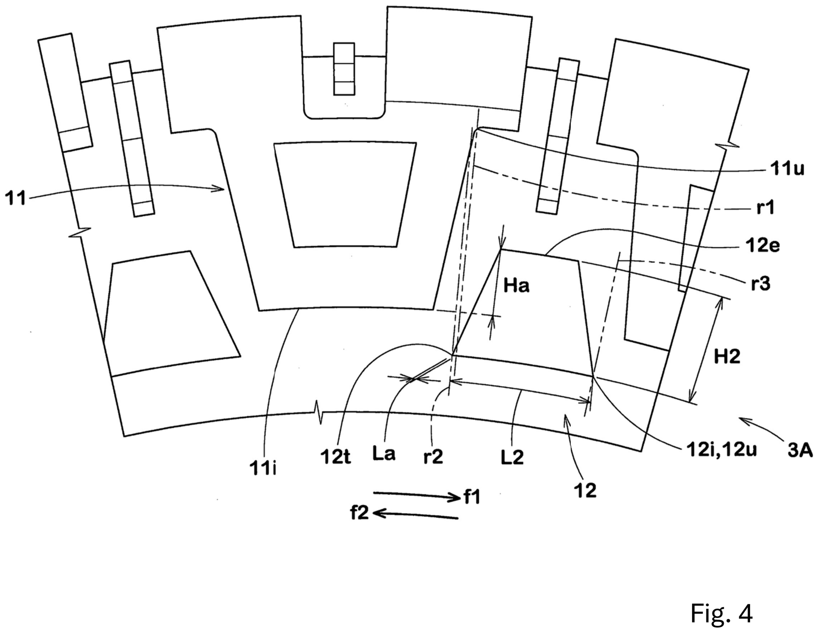

FIG. 3 is a side view of the tire 1, and is a front view of the first side portion 3A. FIG. 4 is an enlarged view of FIG. 3. As shown in FIG. 3 and FIG. 4, one of the first side blocks 11 and one of the second side blocks 12, which are adjacent to each other in the tire circumferential direction, overlap in the tire radial direction and the tire circumferential direction. In addition, an overlapping length Ha in the tire radial direction by which the first side block 11 and the second side block 12 adjacent to each other overlap is 30% to 60% of a maximum length H2 in the tire radial direction of the second side block 12. Since the overlapping length Ha is 30% or more of the maximum length H2 of the second side block 12, the first side block 11 and the second side block 12 can assuredly overlap in the tire radial direction, which maintains the cut resistance of the first side portion 3A at a high level. In order to further exhibit such an effect, the overlapping length Ha is preferably 35% or more, and more preferably 40% or more of the maximum length H2 of the second side block 12. Since the overlapping length Ha is 60% or less of the maximum length H2 of the second side block 12, the mass is prevented from excessively increasing, and mass imbalance in the first side portion 3A can be suppressed. In order to further exhibit such an effect, the overlapping length Ha is preferably 55% or less and more preferably 50% or less of the maximum length H2 of the second side block 12.

In addition, an overlapping length La in the tire circumferential direction by which the first side block 11 and the second side block 12 adjacent to each other overlap is 5% or more of a maximum length L2 in the tire circumferential direction of the second side block 12. This allows the cut resistance of the first side portion 3A to be maintained at a high level. In order to further exhibit such an effect, the overlapping length La is preferably 10% or more, and more preferably 15% or more of the maximum length L2 of the second side block 12. As a result of having such a configuration, the tire 1 of the present embodiment can improve uniformity while maintaining the cut resistance of the first side portion 3A.

If the overlapping length La is excessively large, mass imbalance in the first side portion 3A may increase. Thus, the overlapping length La is preferably 25% or less, more preferably 15% or less, and further preferably 10% or less of the maximum length L2 of the second side block 12.

The overlapping length Ha in the tire radial direction is a separation distance in the tire radial direction between an outer end 12e of the second side block 12 and an inner end 11i in the tire radial direction of the first side block 11. The maximum length H2 of the second side block 12 is a separation distance in the tire radial direction between an inner end 12i and the outer end 12e in the tire radial direction of the second side block 12. The overlapping length La in the tire circumferential direction is a separation distance in the tire circumferential direction between a tire radial line r1 and a tire radial line r2, on an outer end 12t on the side facing a second tire circumferential direction f2 of the second side block 12 (the side on which the first side block 11 adjacent to the second side block 12 is located). The tire radial line r1 is a tire radial line that passes through an outer end 11u on the side facing a first tire circumferential direction f1 of the first side block 11 (the side on which the second side block 12 adjacent to the first side block 11 is located). The tire radial line r2 is a tire radial line passing through the outer end 12t of the second side block 12. The maximum length L2 of the second side block 12 is a separation distance in the tire circumferential direction between the tire radial line r2 and a tire radial line r3, the separation distance passing through either an outer end 12u or the outer end 12t, whichever is positioned further inward in the tire radial direction. The outer end 12u is an end on the side facing the first tire circumferential direction f1 of the second side block 12. The tire radial line r3 is a tire radial line passing through the outer end 12u of the second side block 12. In the present embodiment, the outer end 12t and the outer end 12u are arranged at the same position in the tire radial direction. In FIG. 4, the first tire circumferential direction f1 is defined as clockwise, and the second tire circumferential direction f2 is defined as counterclockwise. However, the first tire circumferential direction f1 and the second tire circumferential direction f2 are not limited to such a mode.

As shown in FIG. 2 and FIG. 3, a plurality of shoulder lateral grooves 6 extending in the tire axial direction are formed on the first side portion 3A side of the tread portion 2. The shoulder lateral grooves 6 extend inward and outward in the tire axial direction across the tread end Te. The shoulder lateral grooves 6 are arranged such that first shoulder lateral grooves 6A and second shoulder lateral grooves 6B alternate in the tire circumferential direction. Each first shoulder lateral groove 6A terminates so as to be connected to the side block 10, for example. Each second shoulder lateral groove 6B terminates at a position separated from the side block 10.

The tread portion 2 includes shoulder blocks 7 arranged between the shoulder lateral grooves 6 adjacent to each other in the tire circumferential direction. The shoulder blocks 7 are formed such that first shoulder blocks 7A and second shoulder blocks 7B are alternately arranged in the tire circumferential direction. The first shoulder blocks 7A include first tread ends T1. The second shoulder blocks 7B include second tread ends T2 located on the inner side in the tire axial direction with respect to the first tread ends T1. Thus, the tread end Te of the present embodiment is formed such that the first tread ends T1 and the second tread ends T2 are alternately arranged in the tire circumferential direction.

Each shoulder block 7 includes a ground-contact surface 8 extending inward in the tire axial direction from the tread end Te, and a buttress surface 9 extending outward in the tire axial direction from the tread end Te. The ground-contact surface 8 is a surface that is brought into contact with the flat surface in the standardized load-applied state. The buttress surface 9 is a surface that is connected to the tread end Te and that remains out of contact with the flat surface. The ground-contact surface 8 extends parallel to a groove bottom 6s (shown in FIG. 1) of each shoulder lateral groove 6, for example.

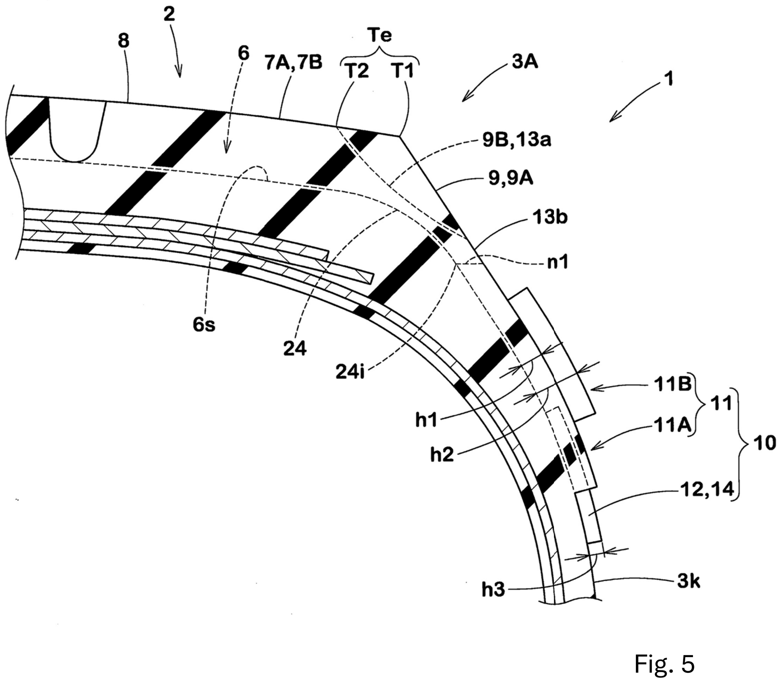

FIG. 5 is an enlarged view of the tire 1 in FIG. 1. FIG. 5 shows a portion around the tread end Te. As shown in FIG. 5, in a tire meridional cross section, a buttress surface 9A of each first shoulder block 7A is formed by one surface extending in a straight line, or in an arc that is convex outward in the tire axial direction. The buttress surface 9A is connected to the first tread end T1, for example. In the tire meridional cross section, a buttress surface 9B of each second shoulder block 7B is formed by two surfaces composed of a first surface portion 13a and a second surface portion 13b. The first surface portion 13a is connected to the second tread end T2 and extends in an arc that is convex inward in the tire axial direction. The second surface portion 13b is connected to the first surface portion 13a and extends in a straight line or in an arc that is convex outward in the tire axial direction. The first surface portion 13a and the second surface portion 13b are connected via a bent portion. The buttress surface 9A of the first shoulder block 7A and the buttress surface 9B of the second shoulder block 7B are not limited to such a mode.

In the present description, the side reference surface 3k is the outer surface of the first side portion 3A that smoothly extends, excluding recesses and protrusions such as spew, bulge, dent, and mark portion K. The side reference surface 3k is formed, for example, as an arc that is convex outward in the tire axial direction. The side reference surface 3k is formed, for example, so as to be smoothly connected to the groove bottom 6s of the shoulder lateral groove 6. In the present embodiment, the side reference surface 3k is smoothly connected to the groove bottom 6s of the second shoulder lateral groove 6B. In the present embodiment, the mark portion K is provided on the inner side in the tire radial direction of the side block 10.

As shown in FIG. 2, the first side blocks 11 and the second side blocks 12 are arranged at equal pitches in the tire circumferential direction, for example. This allows localized mass imbalance in the first side portion 3A to be further reduced. The first side blocks 11 and the second side blocks 12 may be respectively arranged at different pitches in the tire circumferential direction, for example.

Middle positions 11c in the tire radial direction of the respective first side blocks 11 are aligned at the same height in the tire radial direction. Middle positions 12c in the tire radial direction of the respective second side blocks 12 are aligned at the same height in the tire radial direction. In addition, the middle positions 11c of the first side blocks 11 are located outward of the middle positions 12c of the second side blocks 12 in the tire radial direction. In the side view of the tire, centroids 11s (shown in FIG. 3) of the first side blocks 11 are located outward of centroids 12s of the second side blocks 12 in the tire radial direction.

In the present embodiment, an outer end 11e in the tire radial direction of each first side block 11 is located outward of the outer end 12e in the tire radial direction of each second side block 12, in the tire radial direction. The inner end 11i in the tire radial direction of the first side block 11 is located outward of the inner end 12i in the tire radial direction of the second side block 12, in the tire radial direction. The inner end 11i in the tire radial direction of the first side block 11 is located inward of the outer end 12e in the tire radial direction of the second side block 12, in the tire radial direction.

As shown in FIG. 3, the first side blocks 11 are connected to the shoulder blocks 7. Each first side block 11 is connected to the first shoulder block 7A and the second shoulder block 7B. The first side block 11 is smoothly connected to the buttress surface 9A of the first shoulder block 7A and the second surface portion 13b of the second shoulder block 7B. In FIG. 3, boundaries B1 between the first side blocks 11 and the shoulder blocks 7 are indicated by alternate long and two short dashes lines. In the present embodiment, the second side blocks 12 are arranged without being connected to the shoulder block 7.

In a mode in which the side blocks 10 and the shoulder blocks 7 are connected to each other, the boundaries B1 between the side blocks 10 and the shoulder blocks 7 are defined by a vulcanization mold (not shown). The vulcanization mold allows a green tire placed therein to be vulcanized and molded to form the tire 1. The vulcanization mold includes a tread mold for molding the tread portion 2 and side molds (not shown) for molding the first side portion 3A and the second side portion. The tread mold and the side molds are jointed at a joint surface during vulcanization molding. Each boundary B1 is defined at the position of the joint surface.

In the present embodiment, each first side block 11 has a reverse taper shape and has a circumferential length increasing toward the outer side in the tire radial direction. Each second side block 12 has a taper shape and has a circumferential length decreasing toward the outer side in the tire radial direction, for example. More specifically, the first side block 11 and the second side block 12 each have, for example, an isosceles trapezoidal shape. In the first side block 11, the long side is located outward of the short side in the tire radial direction. In the second side block 12, the long side is located inward of the short side in the tire radial direction. With such side blocks 10, the mass of overlapping portions thereof can be prevented from increasing, and thus uniformity can be further improved.

The shape of each side block 10 is not limited to such a mode. For example, the first side block 11 may have an inverted triangular shape, and the second side block 12 may have a triangular shape. More specifically, the first side block 11 may have, for example, an isosceles triangular shape (including an equilateral triangular shape) in which the base is positioned outward of the apex in the tire radial direction. Similarly, the second side block 12 may have, for example, an isosceles triangular shape (including an equilateral triangular shape) in which the base is positioned inward of the apex in the tire radial direction. Furthermore, the side block 10 may have another polygonal shape, and is not limited to polygonal shapes.

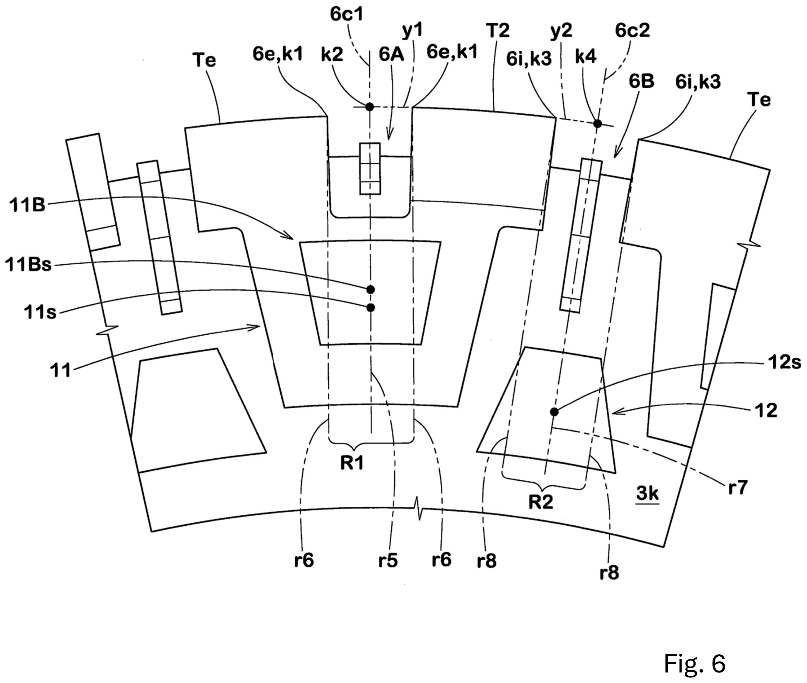

FIG. 6 is an enlarged view of FIG. 3. As shown in FIG. 6, the first side block 11 overlaps in the tire circumferential direction with a first projected region R1 obtained by projecting the first shoulder lateral groove 6A toward the inner side in the tire radial direction. The second side block 12 overlaps in the tire circumferential direction with a second projected region R2 obtained by projecting the second shoulder lateral groove 6B toward the inner side in the tire radial direction. This allows each side block 10 to be disposed in a position having a small mass (a portion in which the shoulder lateral groove 6 is disposed) of the first side portion 3A, so that localized mass imbalance in the first side portion 3A is further reduced. Therefore, uniformity is further improved.

The first projected region R1 is a region between two tire radial lines r6, which are obtained by translating a tire radial line r5 to each of intersection points k1 at which a pair of groove edges 6e of the first shoulder lateral groove 6A intersect with the tread end Te. The tire radial line r5 is a tire radial line that passes an intersection point k2 between a groove width center line 6c1 of the first shoulder lateral groove 6A and a tire circumferential line y1 passing through the second tread end T2. The second projected region R2 is a region between two tire radial lines r8, which are obtained by translating a tire radial line r7 to each of intersection points k3 at which a pair of groove edges 6i of the second shoulder lateral groove 6B intersect with the tread end Te. The tire radial line r7 is a tire radial line that passes through an intersection point k4 of a groove width center line 6c2 of the second shoulder lateral groove 6B and a tire circumferential line y2 passing through the second tread end T2.

In the side view of the tire, the centroid 11s of the first side block 11 preferably overlaps with the first projected region R1 in the tire circumferential direction. In the side view of the tire, the centroid 11s of the first side block 11 is more preferably located on the tire radial line r5. In addition, the centroid 12s of the second side block 12 preferably overlaps with the second projected region R2 in the tire circumferential direction. In the side view of the tire, the centroid 12s of the second side block 12 is more preferably located on the tire radial line r7. Thus, uniformity is further improved.

A volume V2 of a portion, which protrudes from the side reference surface 3k, of the second side block 12, is preferably smaller than a volume V1 of a portion, which protrudes from the side reference surface 3k, of the first side block 11. This allows the mass imbalance between a tire radially outer portion (e.g., around the first tire circumferential line Y1) having a relatively large circumferential length and a tire radially inner portion (e.g., around the second tire circumferential line Y2) having a relatively small circumferential length to be reduced. In order to more effectively exhibit such an effect, the volume V2 of the second side block 12 is preferably 20% or more and more preferably 30% or more of the volume V1 of the first side block 11, and is preferably 50% or less and more preferably 40% or less of the volume V1 of the first side block 11.

As shown in FIG. 2 and FIG. 5, each first side block 11 includes a first portion 11A protruding from the side reference surface 3k at a first height h1, and a second portion 11B protruding from the side reference surface 3k at a second height h2 that is greater than the first height h1. The first side block 11 located on the outer side in the tire radial direction is the side block 10 more susceptible to cut damage than the second side block 12. Therefore, the first side block 11 including the second portion 11B can enhance cut resistance.

The first height h1 and the second height h2 decrease toward the inner side in the tire radial direction. This allows both cut resistance and uniformity to be achieved. Although not particularly limited, the first height h1 is preferably 5 mm or greater and more preferably 6 mm or greater, and is preferably 9 mm or less and more preferably 8 mm or less, for example.

The difference (h2-h1) between the second height h2 and the first height h1 is preferably 60% or more and more preferably 70% or more of the first height h1, and is preferably 100% or less and more preferably 90% or less of the first height h1. Since the difference (h2-h1) is 60% or more of the first height h1, cut resistance can be maintained at a high level. Since the difference (h2-h1) is 100% or less of the first height h1, the mass of the first side portion 3A is prevented from excessively increasing. The first height h1 and the second height h2 are defined at the same position in the tire radial direction.

As shown in FIG. 6, in a side view of the tire, a centroid 11Bs of the second portion 11B is located outward of the centroid 11s of the first side block 11 in the tire radial direction. Since the second portion 11B is located outward of the first side block 11 in the tire radial direction as described above, cut resistance can be further improved.

As shown in FIG. 5, the second side block 12 is formed by a third portion 14 protruding from the side reference surface 3k at a third height h3. The third height h3 also decreases toward the inner side in the tire radial direction. This allows both cut resistance and uniformity to be achieved. The third height h3 may be at the same height across the inner and outer sides in the tire radial direction.

At the same position in the tire radial direction, the third height h3 is smaller than the first height h1. Such a second side block 12 achieves both uniformity and cut resistance.

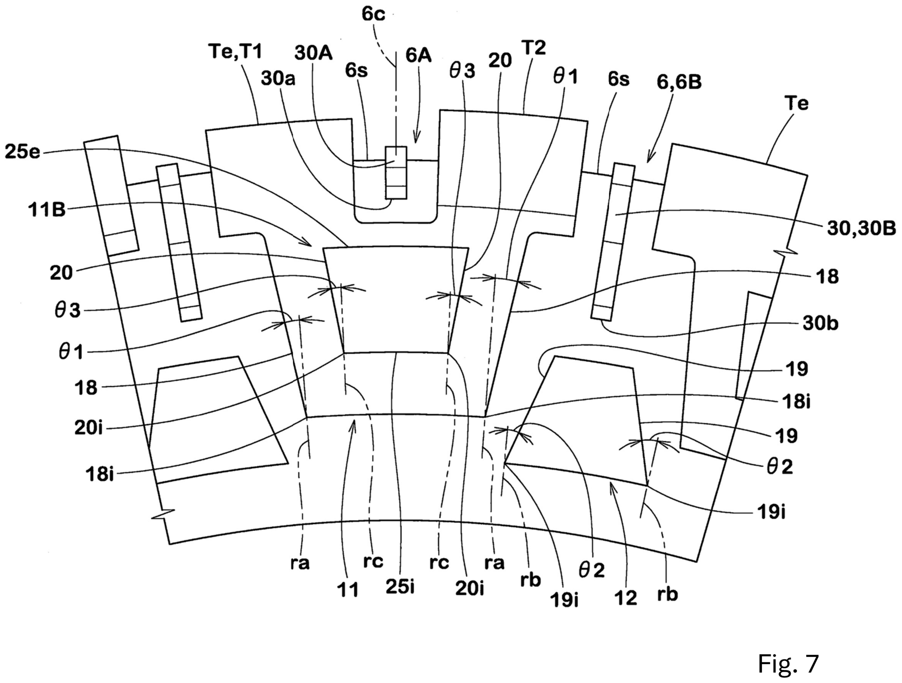

FIG. 7 is an enlarged view of FIG. 3. As shown in FIG. 7, the first side block 11 has a pair of first outer edges 18 disposed on both end sides in the tire circumferential direction and extending in the tire radial direction. The pair of first outer edges 18 respectively have inner ends 18i in the tire radial direction. The second side block 12 has a pair of second outer edges 19 disposed on both end sides in the tire circumferential direction and extending in the tire radial direction. The pair of second outer edges 19 respectively have inner ends 19i in the tire radial direction. The pair of first outer edges 18 and the pair of second outer edges 19 each linearly extend so as to be inclined relative to the tire radial direction.

An angle θ1 between each of the pair of first outer edges 18 and a tire radial line ra passing through each inner end 18i is preferably 5 degrees or greater and more preferably 10 degrees or greater, and is preferably 30 degrees or less and more preferably 25 degrees or less. This prevents the mass of the first side block 11 from excessively increasing, and thus mass imbalance decreases, so that uniformity, particularly dynamic balance (DB), can be improved. From the same viewpoint, an angle θ2 between each of the pair of second outer edges 19 and a tire radial line rb passing through each inner end 19i is preferably 5 degrees or greater and more preferably 10 degrees or greater, and is preferably 30 degrees or less and more preferably 25 degrees or less. In the present embodiment, the first outer edges 18 extend parallel to the second outer edges 19.

The second portion 11B has a pair of third outer edges 20 disposed on both end sides in the tire circumferential direction and extending in the tire radial direction. The pair of third outer edges 20 respectively have inner ends 20i in the tire radial direction. An angle θ3 between each of the pair of third outer edges 20 and a tire radial line rc passing through each inner end 20i is preferably 5 degrees or greater and more preferably 10 degrees or greater, and is preferably 30 degrees or less and more preferably 25 degrees or less. This prevents the mass of the second portion 11B from increasing, and thus uniformity can be enhanced. In the present embodiment, the first outer edges 18 extend parallel to the third outer edges 20.

As shown in FIG. 2 and FIG. 7, the plurality of shoulder lateral grooves 6 respectively extend along the longitudinal directions of the shoulder lateral grooves 6, and include protectors 30 protruding from the groove bottoms 6s. The protectors 30 are disposed on groove width center lines 6c of the shoulder lateral grooves 6. The protectors 30 include first protectors 30A provided on the first shoulder lateral grooves 6A and second protectors 30B provided on the second shoulder lateral grooves 6B. Each first protector 30A extends toward the first side block 11 and terminates without being connected to the first side block 11. Each second protector 30B extends toward the second side block 12 and terminates without being connected to the second side block 12. An outer end 30a in the tire axial direction of the first protector 30A is located outward of the first tread end T1 in the tire axial direction. An outer end 30b in the tire axial direction of the second protector 30B is located inward of an outer end 25e in the tire radial direction of the second portion 11B, in the tire radial direction. In addition, the outer end 30b in the tire axial direction of the second protector 30B is located outward of an inner end 25i in the tire radial direction of the second portion 11B, in the tire radial direction. Such a second protector 30B serves to maintain cut resistance at a high level.

Although the particularly preferred embodiment of the present invention has been described above in detail, the present invention is not limited to the illustrated embodiment, and various modifications can be made to implement the present invention.

### EXAMPLES

Pneumatic tires each having the basic structure in FIG. 1 and the basic shape of the first side portion in FIG. 2 were produced as test tires on the basis of specifications in Table 1. Each test tire was tested for cut resistance and uniformity. The specifications common to the respective test tires and test methods are as follows.
Tire size: 35×12.50R17
Internal pressure: 450 kPa
In the Table, "Presence/absence of connection between blocks" means the connection between the first side block and the shoulder block.

The volume of the first side block is the same in all Examples and the Comparative example.

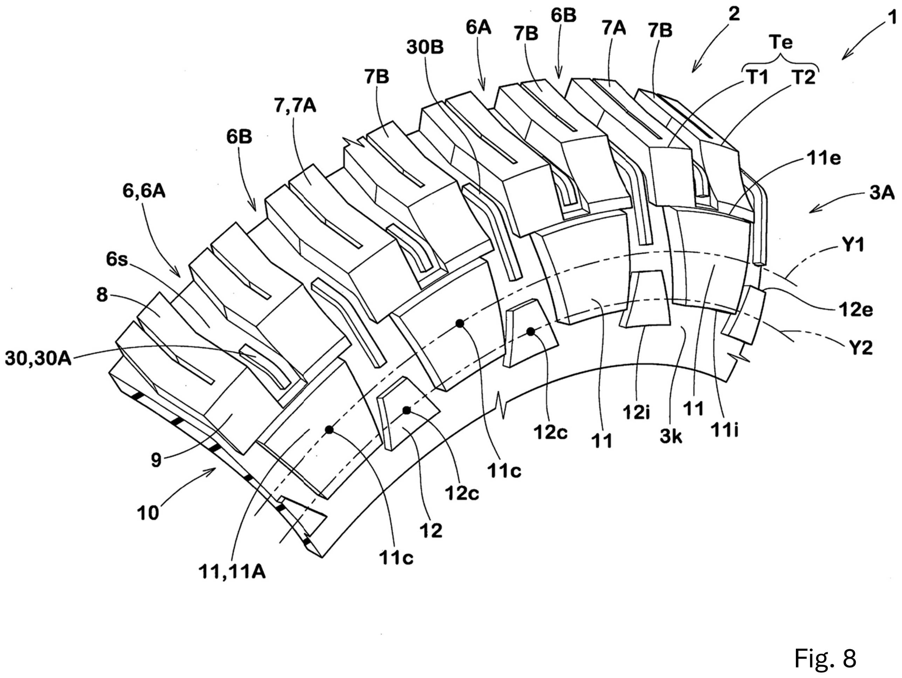

The configurations of the first side blocks of Example 7 are shown in FIG. 8.

### <Cut resistance>

The test tires were mounted on all wheels of a four-wheel drive vehicle having an engine displacement of 3500 cc. A test driver drove approximately 1500 km over rocky terrain containing rocks, rubble, and the like, and then the cut resistance was evaluated based on the depth and length of cut damage that has occurred on the outer surface of the first side portion. The results are indicated as scores with the result of the Comparative example 1 as 100. The higher the value, the smaller the cut damage that affects tire performance, and the better the cut resistance.

### <Uniformity>

Radial force variation (RFV) and dynamic balance (DB) were each measured under the following conditions, by using a tire uniformity tester. The results are indexed by setting the measurement value of the Comparative example 1 to 100, and the other measurement values are adjusted such that higher values indicate better performance.

The results of the tests are shown in Table 1.
Load: 8.0 kN
Speed: 10 km/h

**[Table 1]**

| | Comp. Ex. 1 | Ex. 1 | Ex. 2 | Ex. 3 | Ex. 4 | Ex. 5 | Ex. 6 | Ex. 7 | Ex. 8 | Ex. 9 | Ex. 10 | Ex. 11 | Ex. 12 |
|---|---|---|---|---|---|---|---|---|---|---|---|---|---|
| Ha/H2 (%) | 0 | 60 | 30 | 45 | 60 | 60 | 60 | 60 | 60 | 60 | 60 | 60 | 60 |
| La/L2 (%) | 0 | 5 | 5 | 5 | 5 | 5 | 5 | 5 | 5 | 5 | 5 | 10 | 15 |
| θ1, θ2 (degrees) | 5 | 5 | 5 | 5 | 5 | 5 | 30 | 5 | 5 | 5 | 5 | 5 | 5 |
| V2/V1 (%) | 50 | 50 | 50 | 50 | 20 | 50 | 50 | 50 | 50 | 50 | 50 | 50 | 50 |
| Presence/absence of second portion of first side block | Present | Present | Present | Present | Present | Present | Present | Absent | Present | Present | Present | Present | Present |
| (h2-h1)/h1 (%) | 100 | 100 | 100 | 100 | 100 | 100 | 100 | - | 60 | 100 | 100 | 100 | 100 |
| Presence/absence of second protector | Present | Present | Present | Present | Present | Present | Present | Present | Present | Absent | Present | Present | Present |
| Presence/absence of connection between blocks | Present | Present | Present | Present | Present | Present | Present | Present | Present | Present | Absent | Present | Present |
| Cut resistance [score: higher value is better] | 100 | 111 | 111 | 111 | 109 | 111 | 111 | 109 | 110 | 109 | 109 | 111 | 111 |
| DB [index: higher value is better] | 100 | 107 | 104 | 105 | 107 | 106 | 106 | 107 | 106 | 107 | 107 | 107 | 106 |
| RFV [index: higher value is better] | 100 | 103 | 108 | 108 | 106 | 108 | 108 | 108 | 108 | 108 | 108 | 108 | 108 |

As a result of the test, it is understood that the tires of each Example have improved uniformity while maintaining cut resistance as compared to the tires of the Comparative example.

## Claims

1. A pneumatic tire (1) comprising:
a tread portion (2); and
a first side portion (3A) connected to a tread end (Te) of the tread portion (2), wherein
in the first side portion (3A), a plurality of side blocks (10) protruding outward in a tire axial direction from a side reference surface (3k) are arranged in a tire circumferential direction,
the plurality of side blocks (10) include a plurality of first side blocks (11) arranged on a first tire circumferential line (Y1), and a plurality of second side blocks (12) arranged on a second tire circumferential line (Y2) located inward of the first tire circumferential line (Y1) in a tire radial direction,
the first side blocks (11) and the second side blocks (12) are spaced apart from each other in the tire circumferential direction,
one of the first side blocks (11) and one of the second side blocks (12), which are adjacent to each other in the tire circumferential direction, overlap in the tire radial direction and the tire circumferential direction,
an overlapping length (Ha) in the tire radial direction by which the first side block (11) and the second side block (12) adjacent to each other overlap is 30% to 60% of a maximum length (H2) in the tire radial direction of the second side block (12), and
an overlapping length (La) in the tire circumferential direction by which the first side block (11) and the second side block (12) adjacent to each other overlap is 5% or more of a maximum length (L2) in the tire circumferential direction of the second side block (12).

2. The pneumatic tire (1) according to claim 1, wherein
a plurality of shoulder lateral grooves (6) extending in the tire axial direction are formed on the first side portion (3A) side of the tread portion (2),
the plurality of shoulder lateral grooves (6) are arranged such that first shoulder lateral grooves (6A) and second shoulder lateral grooves (6B) alternate in the tire circumferential direction,
each first side block (11) overlaps in the tire circumferential direction with a first projected region (R1) obtained by projecting each first shoulder lateral groove (6A) toward an inner side in the tire radial direction, and
each second side block (12) overlaps in the tire circumferential direction with a second projected region (R2) obtained by projecting each second shoulder lateral groove (6B) toward the inner side in the tire radial direction.

3. The pneumatic tire (1) according to claim 2, wherein
in a side view of the tire (1),
a centroid (11s) of the first side block (11) overlaps with the first projected region (R1) in the tire circumferential direction, and
a centroid (12s) of the second side block (12) overlaps with the second projected region (R2) in the tire circumferential direction.

4. The pneumatic tire (1) according to any one of claims 1 to 3, wherein
a volume (V2) of a portion, which protrudes from the side reference surface (3k), of the second side block (12) is 20% to 50% of a volume (V1) of a portion, which protrudes from the side reference surface (3k), of the first side block (11).

5. The pneumatic tire (1) according to any one of claims 1 to 4, wherein
each first side block (11) includes a first portion (11A) protruding from the side reference surface (3k) at a first height (h1), and a second portion (11B) protruding from the side reference surface (3k) at a second height (h2) that is greater than the first height (h1).

6. The pneumatic tire (1) according to according to any one of claims 1 to 5, wherein
the first side block (11) has a pair of first outer edges (18) disposed on both end sides in the tire circumferential direction and extending in the tire radial direction,
an angle (θ1) between each of the pair of first outer edges (18) and a tire radial line (ra) passing through an inner end (18i) in the tire radial direction of each of the pair of first outer edges (18) is 5 to 30 degrees,
the second side block (12) has a pair of second outer edges (19) disposed on both end sides in the tire circumferential direction and extending in the tire radial direction, and
an angle (θ2) between each of the pair of second outer edges (19) and a tire radial line (rb) passing through an inner end (19i) in the tire radial direction of each of the pair of second outer edges (19) is 5 to 30 degrees.

7. The pneumatic tire (1) according to claim 2 or 3, wherein
the plurality of shoulder lateral grooves (6) respectively extend along longitudinal directions of the shoulder lateral grooves (6), and include protectors (30) protruding from groove bottoms (6s).

8. The pneumatic tire (1) according to claim 2 or 3, wherein
the tread portion (2) includes shoulder blocks (7) arranged between the shoulder lateral grooves (6) adjacent to each other in the tire circumferential direction, and
the first side blocks (11) are connected to the shoulder blocks (7).

9. The pneumatic tire (1) according to any one of claims 1 to 8, wherein
each first side block (11) has a reverse taper shape and has a circumferential length increasing toward an outer side in the tire radial direction, and
each second side block (12) has a taper shape and has a circumferential length decreasing toward the outer side in the tire radial direction.
